# FASCICULE DE BREVET EUROPEEN

(11) **EP 1 576 620 B1**
(45) Date de publication et mention de la délivrance du brevet: **12.12.2007**
(21) Numéro de dépôt: 03810009.5
(22) Date de dépôt: 22.12.2003
(51) Int. Cl.: G21F 5/06

(54) **EMBALLAGE DESTINE AU TRANSPORT/STOCKAGE DE MATIERES RADIOACTIVES**
BEHÄLTER ZUM TRANSPORT BZW. ZUR LAGERUNG RADIOAKTIVER STOFFE
PACKAGING FOR THE TRANSPORT/STORAGE OF RADIOACTIVE MATERIAL

(30) Priorité: 24.12.2002 FR 0216649
(43) Date de publication de la demande: 21.09.2005
(73) Titulaire: TN International, 78182 Montigny Le Bretonneux (FR)
(72) Inventeur: BERSEGOL, Jean-Pierre, F-95270 Luzarches (FR); ALAURENT, Benoît, F-30200 Bagnols sur Ceze (FR); CHIOCCA, René, F-75019 Paris (FR)
(74) Mandataire: Poulin, Gérard
(86) Numéro de dépôt international: PCT/FR2003/050199
(87) Numéro de publication internationale: WO 2004/059660

(56) Documents cités:
- DE-A- 2 336 942
- FR-A- 1 494 181
- FR-A- 2 649 824
- FR-A- 2 691 765
- US-A1- 2002 153 498
- PATENT ABSTRACTS OF JAPAN vol. 2000, no. 26, 1 juillet 2002 (2002-07-01) & JP 2001 264486 A (JAPAN NUCLEAR CYCLE DEVELOPMENT INST STATES OF PROJECTS;KENSA KAIHATSU), 26 septembre 2001 (2001-09-26)

## Description

### DOMAINE TECHNIQUE

La présente invention se rapporte à un emballage destiné au transport/stockage de matières radioactives.

### ETAT DE LA TECHNIQUE ANTERIEURE

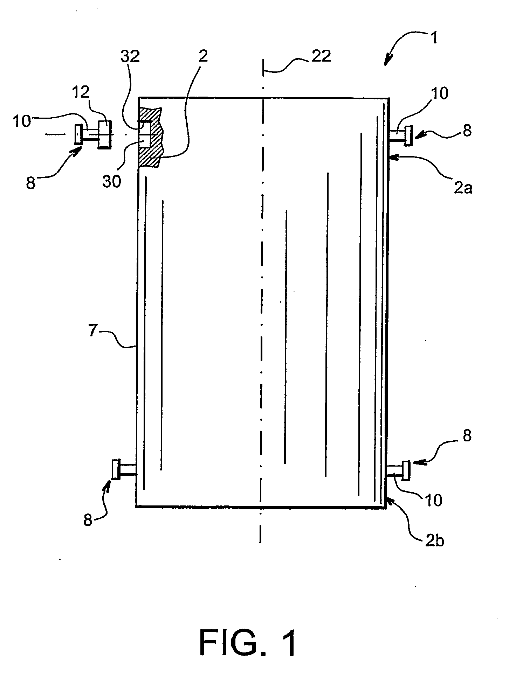

Comme on peut le voir sur la figure 1 représentant un emballage 1 classique de l'art antérieur, cet emballage 1 dispose d'un corps d'emballage 2 muni d'une paroi interne (non représentée) délimitant une cavité à l'intérieur de laquelle peuvent être placées les matières radioactives.

Par ailleurs, l'emballage 1 comporte une pluralité d'organes de manutention 8, également appelés « tourillons de manutention ».

Comme on peut le voir sur la figure 1, chaque organe de manutention 8 est muni d'une partie principale 10 faisant saillie du corps d'emballage 2 vers l'extérieur. La partie principale 10 est conçue de manière à pouvoir coopérer avec un mécanisme de préhension (non représenté), afin de permettre la réalisation des diverses opérations de manutention de l'emballage. D'autre part, chaque organe de manutention 8 dispose également d'une embase 12 solidaire de la partie principale 10, cette embase 12 étant située dans un logement d'embase 30, délimité par une paroi de logement d'embase 32 prévue sur le corps d'emballage 2 de l'emballage 1.

Les emballages destinés au transport/stockage de matières radioactives peuvent, au cours de leur cycle de vie, être amenés à être chargés/déchargés sous eau, dans les piscines des installations nucléaires.

Ainsi, lors des périodes d'immersion, l'emballage est en contact avec l'eau contaminée de la piscine, et ses surfaces externes sont donc également susceptibles d'être contaminées. Pour cette raison, les exigences réglementaires imposent que les surfaces de l'emballage en contact avec l'eau ne présentent pas de zones de rétention, afin qu'elles puissent être facilement décontaminées, par exemple à l'aide d'un jet d'eau haute pression.

Les organes de manutention 8 sont préférentiellement agencés au niveau d'une portion d'extrémité supérieure 2a et d'une portion d'extrémité inférieure 2b du corps d'emballage 2. Par conséquent, lorsque l'emballage est immergé dans la fosse de chargement/déchargement, les organes de manutention 8 sont également susceptibles d'être contaminés.

De cette façon, outre la nécessité de prévoir des opérations de décontamination de chaque organe de manutention 8, il est également indispensable de prévoir des moyens d'étanchéité (non représentés sur la figure 1) interdisant les infiltrations d'eau entre l'embase 12 de l'organe de manutention 8, et la paroi de logement d'embase 32 prévue sur le corps d'emballage 2 de l'emballage 1.

Dans l'art antérieur, une première solution a d'abord consisté à prévoir un assemblage par soudage de l'organe de manutention dans son logement associé, assurant ainsi une étanchéité parfaite de l'ensemble obtenu. Cependant, cette première solution de montage irréversible a rapidement été abandonnée, dans la mesure où il a été observé que les opérations de manutention réalisées à répétition pouvaient conduire à la dégradation de ces organes de manutention, de sorte qu'il était parfois nécessaire de les remplacer une ou plusieurs fois au cours du cycle de vie de l'emballage.

Ainsi, une solution d'assemblage permettant un montage/démontage aisé des organes de manutention a alors été proposée. Cette solution réside dans l'utilisation d'une pluralité de vis de fixation, réparties autour de la partie principale et assurant la fixation de l'embase de l'organe de manutention sur le corps d'emballage. Il est précisé à titre indicatif que cette solution a notamment été préférée à une autre solution également envisagée, consistant à visser directement l'embase dans son logement associé. Le choix d'adopter une pluralité de vis agencées sur l'embase plutôt que de prévoir un filetage unique sur la surface extérieure de cette embase s'explique notamment par la possibilité de faire face à des contraintes mécaniques importantes, telles que les contraintes de flexion/cisaillement élevées rencontrées lors des opérations de manutention.

Néanmoins, avec un tel assemblage, les moyens d'étanchéité doivent non seulement interdire les infiltrations d'eau, éventuellement contaminée, entre l'embase de l'organe de manutention et la paroi de logement d'embase prévue sur le corps d'emballage, mais également empêcher que de l'eau ne vienne en contact avec les vis de fixation. Il est en effet noté que les surfaces extérieures des vis de fixation, et plus spécifiquement les surfaces filetées, disposent d'une géométrie telle que leur décontamination serait difficilement envisageable, en ce sens que le temps nécessaire pour effectuer les opérations de décontamination serait totalement démesuré.

De l'art antérieur, on connaît une première forme de réalisation des moyens d'étanchéité, visant à introduire du silicone ou tout autre matériau similaire, dans les divers interstices de l'assemblage. A ce titre, il est précisé que du silicone est alors placé d'une part entre l'embase de l'organe de manutention et la paroi de logement d'embase, et d'autre part entre les vis de fixation et l'embase.

Au cours du temps, cette solution s'est avérée peu efficace en termes d'étanchéité procurée, et a fait apparaître de nombreux inconvénients.

En effet, notons tout d'abord que les opérations d'application ou de réparation des joints en silicone nécessitent d'être réalisées par un personnel qualifié, en raison d'un mode opératoire sensiblement complexe. De plus, ces opérations sont relativement longues à effectuer, ce qui participe à faire augmenter les doses intégrées par les opérateurs.

En outre, la faible efficacité observée des joints en silicone, en terme d'étanchéité procurée, engendre un remplacement régulier de ces derniers, entraînant par conséquent la formation de déchets chimiques/nucléaires importants. De plus, il est noté que ces joints en silicone doivent également être remplacés, du fait que ce matériau a tendance à fixer la contamination.

Par ailleurs, toujours en raison de la faible efficacité procurée par les joints en silicone, des tests d'étanchéité doivent être réalisés fréquemment, ce qui se traduit directement par des pertes significatives en exploitation. A cet égard, il est noté que les tests sont mis en oeuvre en effectuant des « piqûres » sur les joints d'étanchéité, pouvant à terme générer la dégradation du silicone, et nécessiter par conséquent une réparation ou un remplacement des joints testés.

Dans le but de limiter la quantité de silicone à appliquer dans les interstices, il a été proposé de remplacer les joints en silicone initialement prévus au niveau des vis de fixation, par des capsules venant recouvrir individuellement chacune de ces vis de fixation. Toutefois, les opérations de démontage de telles capsules s'avèrent longues et fastidieuses, ce qui ne satisfait naturellement pas les préoccupations des doses intégrées par les opérateurs. De plus, les capsules utilisées ne résolvent pas le problème lié à l'étanchéité entre l'embase de l'organe de manutention et la paroi de logement d'embase, de sorte qu'il est toujours nécessaire d'employer, en quantité suffisamment importante pour qu'elle soit contraignante, la technique d'obturation au silicone générant les inconvénients multiples décrits ci-dessus.

Enfin, un autre type de moyens d'étanchéité ne faisant pas appel au silicone a également été proposé dans l'art antérieur. Il s'agit de l'utilisation d'une couronne ou de deux demi-couronnes en acier inoxydable, assemblées par soudage sur l'embase de l'organe de manutention et sur le corps d'emballage de l'emballage.

Ainsi, l'étanchéité obtenue est très satisfaisante, de telle façon qu'il n'est plus nécessaire de réaliser de contrôle d'étanchéité. Néanmoins, dans le cas où l'on désire remplacer un organe de manutention, par exemple parce qu'il a été dégradé en raison de la répétition des opérations de manutention, il est alors nécessaire de meuler les soudures pour retirer les deux demi-couronnes, et pouvoir ainsi accéder aux vis de fixation. Il est précisé que cette nécessité est également rencontrée lorsqu'il s'agit de vérifier le couple de serrage des vis de fixation, lors des opérations de maintenance.

Ainsi, bien que remédiant à certains inconvénients de la technique d'obturation au silicone, comme celui lié à la faible étanchéité procurée, cette solution reste cependant relativement contraignante. Effectivement, l'opération de démontage des organes de manutention est rendue longue et difficile en raison de la nécessité de meuler les cordons de soudure maintenant les deux demi-couronnes, avant de pouvoir accéder aux vis de fixation de ces organes de manutention.

### EXPOSÉ DE L'INVENTION

L'invention a donc pour but de proposer un emballage destiné au transport/stockage de matières radioactives, l'emballage comprenant un corps d'emballage ainsi qu'au moins un organe de manutention assemblé sur le corps d'emballage à l'aide d'une pluralité de vis de fixation, l'emballage remédiant au moins partiellement aux inconvénients mentionnés ci-dessus relatifs aux réalisations de l'art antérieur.

Plus précisément, le but de l'invention est de présenter un emballage disposant, pour chaque organe de manutention, de moyens d'étanchéité conçus de manière à procurer une étanchéité- suffisamment satisfaisante pour que lorsque l'emballage est chargé/déchargé en piscine, l'eau contaminée n'atteigne ni l'interface entre l'organe de manutention et le corps d'emballage, ni les vis de fixation de ce même organe de manutention, les moyens d'étanchéité étant également conçus de façon à être montés/démontés plus rapidement et plus facilement que dans les réalisations de l'art antérieur.

Pour ce faire, l'invention a pour objet un emballage destiné au transport/stockage de matières radioactives, l'emballage comprenant un corps d'emballage et au moins un organe de manutention assemblé sur le corps d'emballage, chaque organe de manutention étant muni d'une partie principale susceptible de coopérer avec un mécanisme de préhension et faisant saillie du corps d'emballage, ainsi que d'une embase solidaire de la partie principale et située dans un logement d'embase délimité par une paroi de logement d'embase prévue sur le corps d'emballage. L'emballage comporte en outre, pour chaque organe de manutention, d'une part une pluralité de vis de fixation réparties autour de la partie principale et assurant la fixation de l'embase sur le corps d'emballage, et d'autre part des moyens d'étanchéité interposés entre l'embase de l'organe de manutention et le corps d'emballage de l'emballage. Selon l'invention, pour chaque organe de - manutention, les moyens d'étanchéité comprennent une plaque d'étanchéité située dans un logement de plaque délimité conjointement par une paroi de logement de plaque prévue sur l'embase de l'organe de manutention et par une portion de la paroi de logement d'embase, la plaque d'étanchéité étant montée de façon amovible dans le logement de plaque de manière à entourer la partie principale de l'organe de manutention et à recouvrir chaque vis de fixation, les moyens d'étanchéité comportant en outre un joint d'étanchéité externe interposé entre une paroi périphérique externe de la plaque d'étanchéité et la portion de la paroi de logement d'embase délimitant partiellement le logement de plaque, ainsi qu'un joint d'étanchéité interne interposé entre une paroi périphérique interne de cette même plaque d'étanchéité et la paroi de logement de plaque.

Avantageusement, les moyens d'étanchéité mis en oeuvre dans l'emballage selon l'invention protègent de façon satisfaisante la totalité des zones sensibles présentes dans les assemblages entre un organe de manutention et le corps d'emballage de l'emballage.

En effet, ces moyens d'étanchéité de conception relativement simple disposent d'un joint d'étanchéité externe interdisant les infiltrations d'eau entre l'embase de l'organe de manutention et la paroi de logement d'embase prévue sur le corps d'emballage, de manière à éviter la contamination de l'interface entre l'organe de manutention et le corps d'emballage. De plus, les moyens d'étanchéité comportent un joint d'étanchéité interne, qui conjointement avec une plaque d'étanchéité et le joint d'étanchéité externe, permet d'empêcher que de l'eau ne s'introduise dans un espace partiellement délimité par la plaque d'étanchéité, à l'intérieur duquel sont agencées les vis de fixation de l'organe de manutention. Ainsi, les vis de fixation sont également protégées d'une éventuelle contamination.

Par ailleurs, la plaque d'étanchéité est avantageusement montée de manière amovible, par exemple de façon vissée ou de façon clipsée dans son logement de plaque associé, ce qui assure une rapidité et une facilité du montage/démontage de cette plaque d'étanchéité.

De cette manière, les opérations de montage et de démontage d'une telle plaque ne requièrent pas de formation spécifique des opérateurs, contrairement aux moyens d'étanchéité antérieurement employés dans certaines réalisations de l'état de la technique.

En outre, la diminution du temps de montage/démontage des moyens d'étanchéité se traduit directement par une baisse des doses intégrées par les opérateurs lors des opérations de manutention, ainsi que par des gains significatifs en exploitation. I1 est d'autre part précisé que la bonne étanchéité procurée par les moyens d'étanchéité de l'emballage selon l'invention contribue non seulement à fournir une barrière efficace contre la contamination, mais également à augmenter encore davantage les gains en exploitation en raison de la diminution considérable du nombre de réparations à effectuer, notamment par rapport à des solutions moins fiables mettant en oeuvre des joints en silicone. A cet égard, notons que l'absence de silicone ou de matériaux similaires permet aux opérateurs de ne pas avoir à se soucier des effets néfastes que pourrait provoquer la toxicité de tels produits, et génère également une réduction de la quantité de déchets chimiques/nucléaires produits.

Préférentiellement, la paroi périphérique externe de la plaque d'étanchéité comporte un chant externe en contact avec le joint d'étanchéité externe, et la paroi périphérique interne de la plaque d'étanchéité comporte un chant interne en contact avec le joint d'étanchéité interne. Il est alors possible de prévoir que le chant externe dispose d'une rainure externe s'étendant tout le long du chant externe et à l'intérieur de laquelle est logé le joint d'étanchéité externe, et que le chant interne dispose d'une rainure interne s'étendant tout le long du chant interne et à l'intérieur de laquelle est logé le joint d'étanchéité interne. Ainsi, les moyens d'étanchéité non encore assemblés sur l'emballage constituent de façon avantageuse un bloc unique et compact. Bien entendu, il aurait également été possible de placer les joints d'étanchéité externe et interne dans des rainures formées respectivement dans la paroi de logement d'embase et dans la paroi de logement de plaque, sans sortir du cadre de l'invention.

De manière préférentielle, chaque organe de manutention est muni d'un réseau de canaux permettant d'effectuer un contrôle d'étanchéité des moyens d'étanchéité, le réseau de canaux communiquant avec au moins un orifice d'accès prévu dans la partie principale de l'organe de manutention de manière à déboucher sur l'extérieur de cette partie principale, chaque orifice d'accès étant obturé à l'aide d'un bouchon amovible. Ainsi, les opérations de contrôle d'étanchéité peuvent être facilement et rapidement effectuées en retirant le bouchon d'un orifice d'accès, puis en raccordant des moyens de contrôle classiques à ce dernier. Par conséquent, le réseau de canaux prévu sur l'organe de manutention permet la réalisation d'un contrôle fiable, sans endommager les moyens d'étanchéité testés.

A ce titre, notons que pour chaque organe de manutention, la plaque d'étanchéité dispose d'une surface intérieure délimitant partiellement un espace entourant la partie principale de l'organe de manutention et étant en partie comblé par les têtes de vis de fixation. De cette façon, afin d'être en mesure de réaliser un contrôle d'étanchéité, le réseau de canaux cité précédemment peut alors être agencé de façon à autoriser une communication entre cet espace, et au moins un orifice d'accès.

De plus, l'embase de chaque organe de manutention dispose d'une pluralité de trous de passage de vis de fixation. Ainsi, toujours dans un souci de réaliser un contrôle d'étanchéité, le réseau de canaux peut être agencé de façon à autoriser une communication entre chacun des trous de passage et au moins un orifice d'accès.

Naturellement, le réseau de canaux pratiqué dans l'organe de manutention peut être réalisé de sorte qu'il soit en mesure de remplir l'une ou l'autre des fonctions énumérées ci-dessus, ou bien les deux simultanément.

Selon un premier mode de réalisation préféré de la présente invention, pour chaque organe de manutention, la plaque d'étanchéité prend la forme d'une couronne et les joints d'étanchéité externe et interne prennent chacun la forme d'un joint annulaire.

Ainsi, la forme spécifique de couronne de la plaque d'étanchéité lui permet d'être montée de façon vissée dans le logement de plaque.

Pour ce faire, on peut prévoir que le chant interne de la plaque d'étanchéité et la paroi de logement de plaque prévue sur l'embase de l'organe de manutention disposent chacun d'une portion filetée coopérant entre elles. En outre, la plaque d'étanchéité comprend alors avantageusement une surface extérieure munie d'orifices de prise, susceptibles de coopérer avec un outillage adapté pour réaliser le montage/démontage rapide par vissage/dévissage de la plaque d'étanchéité.

Il est par ailleurs précisé que ce premier mode de réalisation préféré est particulièrement mais non-exclusivement adapté lorsque les vis de fixation sont disposées de manière à définir un cercle, et lorsque l'embase de l'organe de manutention prend une forme cylindrique de section circulaire.

Selon un second mode de réalisation préféré de la présente invention, pour chaque organe de manutention, la plaque d'étanchéité est montée de façon clipsée dans le logement de plaque.

Pour ce faire, la paroi de logement de plaque prévue sur l'embase de l'organe de manutention comporte de préférence un épaulement, le joint d'étanchéité interne logé dans la rainure du chant interne de la plaque d'étanchéité étant en appui contre une surface interne de cet épaulement, afin d'assurer le maintien de la plaque d'étanchéité dans le logement de plaque. Dans cette configuration, le joint d'étanchéité interne est également apte à être comprimé entre la rainure du chant interne et une partie de diamètre maximal de l'épaulement, afin d'autoriser le montage/démontage de la plaque d'étanchéité.

De plus, pour faciliter le montage/démontage par clipsage de la plaque d'étanchéité, on peut prévoir qu'au moins un orifice d'accès prévu dans la partie principale de l'organe de manutention est apte à recevoir des moyens de mise en pression/dépression susceptibles de générer, par l'intermédiaire du réseau de canaux, une pression/dépression à l'intérieur de l'espace partiellement délimité par la surface intérieure de la plaque d'étanchéité et entourant la partie principale de l'organe de manutention. De manière avantageuse, l'emploi d'une telle méthode de montage/démontage ne requiert plus la présence d'orifices de prise sur la surface extérieure de la plaque d'étanchéité. Bien entendu, cette absence constitue un avantage, dans le sens où la décontamination de tels orifices peut se révéler fastidieuse. De plus, l'absence d'orifices de prise sur la surface extérieure de la plaque d'étanchéité contribue avantageusement à conférer un très bon aspect visuel à l'emballage.

D'autre part, le montage par clipsage de la plaque d'étanchéité peut permettre à celle-ci de prendre indifféremment la forme d'une couronne ou la forme d'un cadre, contrairement à la solution de vissage présentée dans le premier mode de réalisation préféré de la présente invention. Ainsi, lorsque la plaque d'étanchéité prend la forme d'un cadre quelconque entourant la partie principale de l'organe de manutention, les joints d'étanchéité externe et interne prennent également chacun la forme d'un cadre.

Il est noté que cette forme de cadre est particulièrement mais toujours non-exclusivement adaptée lorsque les vis de fixation destinées à être recouvertes par la plaque d'étanchéité sont disposées de manière à définir un cadre et non un cercle, cette disposition spécifique pouvant notamment être rencontrée lorsque l'embase de l'organe de manutention présente la forme d'un parallélépipède rectangle.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels;
- la figure 1, déjà décrite, représente un emballage destiné au transport/stockage de matières radioactives, selon une réalisation classique l'art antérieur,
- la figure 2 représente une vue en coupe d'un assemblage entre un corps d'emballage et un organe de manutention d'un emballage selon un premier mode de réalisation préféré de la présente invention, cette vue étant prise selon la ligne II-II de la figure 3,
- la figure 3 représente une vue de dessous de l'organe de manutention représenté sur l'assemblage de la figure 2,
- la figure 4 représente une vue similaire à celle représentée sur la figure 2, lorsque la partie principale de l'organe de manutention coopère avec des moyens de contrôle d'étanchéité,
- la figure 5 représente une vue en coupe d'un assemblage entre un corps d'emballage et un organe de manutention d'un emballage selon un second mode de réalisation préféré de la présente invention, cette vue étant prise selon la ligne V-V de la figure 7,
- la figure 6 représente une vue à plus grande échelle d'une partie de l'assemblage représenté sur la figure 5, schématisant de façon plus claire les moyens employés pour assurer le maintien de la plaque d'étanchéité dans son logement de plaque associé, et
- la figure 7 représente une vue de dessous de l'organe de manutention représenté sur l'assemblage de la figure 5.

### EXPOSÉ DÉTAILLÉ DE MODES DE RÉALISATION PRÉFÉRÉS

L'emballage selon l'invention est similaire à l'emballage 1 représenté sur la figure 1 et déjà partiellement décrit précédemment.

Ainsi, l'emballage 1 selon l'invention comporte une pluralité d'organes de manutention 8 assemblés sur le corps d'emballage 2.

Notons que le corps d'emballage 2 dispose d'une paroi externe 7, de préférence de forme cylindrique d'axe longitudinal 22. Dans la suite de la description, cet axe 22 sera donc considéré comme étant l'axe longitudinal du corps d'emballage 2.

Les organes de manutention 8 sont répartis circonférentiellement autour du corps d'emballage 2, par exemple au niveau d'une portion d'extrémité supérieure 2a ainsi qu'au niveau d'une portion d'extrémité inférieure 2b du corps d'emballage 2.

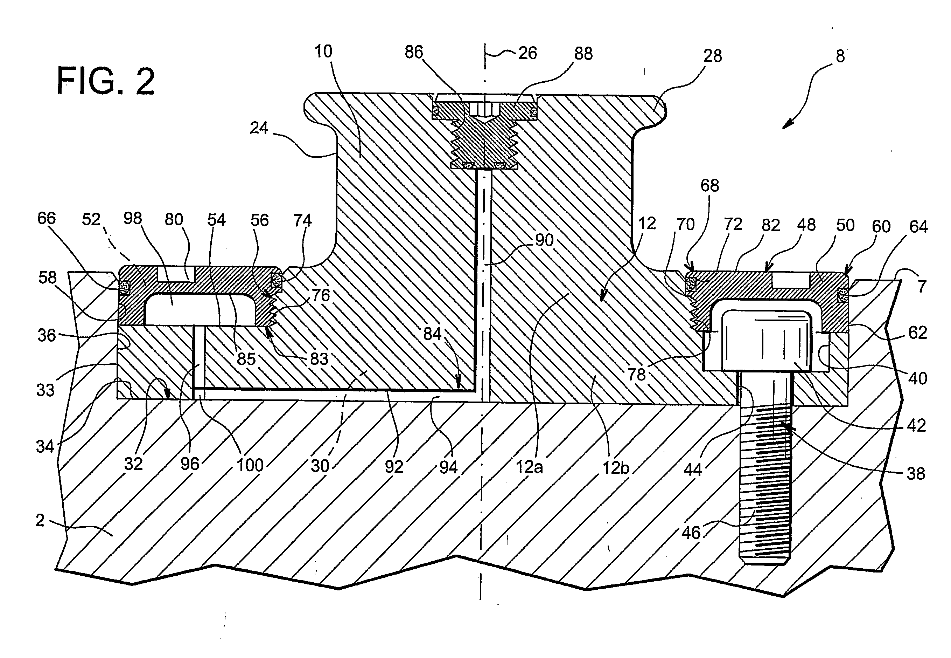

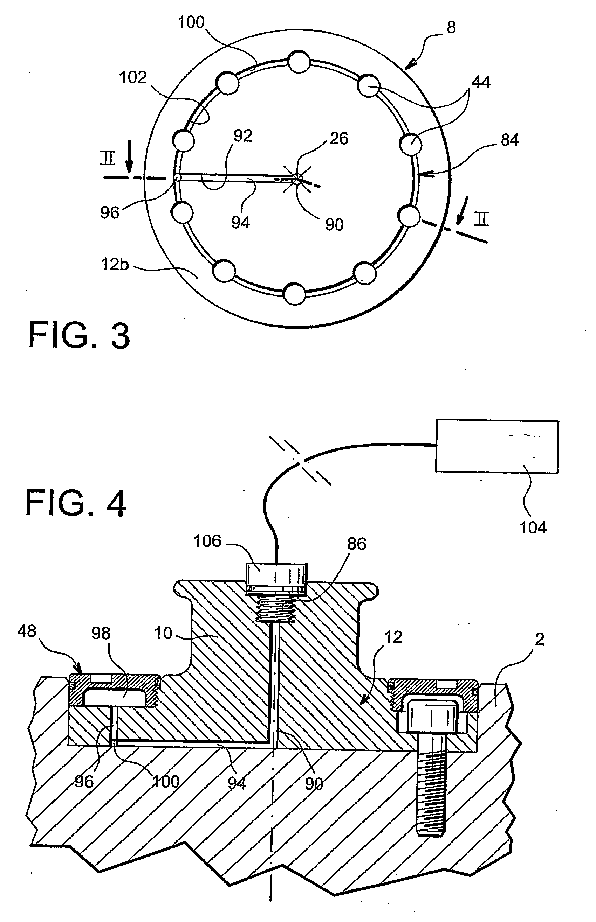

En référence conjointement aux figures 2 et 3, il est représenté un assemblage entre le corps d'emballage 2 et l'un des organes de manutention 8 d'un emballage 1 selon un premier mode de réalisation préféré de la présente invention. Bien entendu, dans ce mode de réalisation préféré, la totalité des assemblages entre les organes de manutention 8 et le corps d'emballage 2 sont de préférence identiques à celui qui va être décrit ci-dessous.

L'organe de manutention 8 dispose d'une partie principale 10 ainsi que d'une embase 12, ces deux parties 10 et 12 étant solidaires et de préférence réalisées d'un seul tenant en acier inoxydable.

La partie principale 10 fait saillie du corps d'emballage 2 vers l'extérieur, et présente une géométrie adaptée pour pouvoir facilement coopérer avec un mécanisme de préhension (non représenté), dans le but d'autoriser la réalisation des opérations de manutention. A titre d'exemple illustratif, la partie principale 10 de l'organe de manutention 8 dispose d'une surface extérieure 24 de forme cylindrique de section circulaire, d'axe longitudinal 26 sensiblement perpendiculaire à l'axe longitudinal 22 du corps d'emballage 2. Par ailleurs, la partie principale 10 peut comporter une portion d'extrémité 28 prenant la forme d'un épaulement, afin d'éviter tout échappement du mécanisme de préhension durant les opérations de manutention.

D'autre part, l'embase 12 de l'organe de manutention 8 est située dans un logement d'embase 30 délimité par une paroi de logement d'embase 32, cette dernière étant prévue sur le corps d'emballage 2 de l'emballage 1. De plus, l'embase 12 comprend une portion supérieure 12a ainsi qu'une portion inférieure 12b, la portion inférieure 12b présentant de préférence une surface latérale 33 de forme cylindrique de section circulaire et d'axe longitudinal identique à l'axe longitudinal 26 de la surface extérieure 24 de la partie principale 10.

La paroi de logement d'embase 32 comporte un fond plat 34 servant de butée pour la portion inférieure 12b de l'embase 12, ainsi qu'une partie latérale 36 de forme cylindrique de section circulaire et épousant toute la surface latérale 33 de cette même portion inférieure 12b. Cependant, comme on peut l'apercevoir sur la figure 2, il est précisé que la portion inférieure 12b de l'embase 12 n'occupe que partiellement le logement d'embase 30, de sorte que la surface latérale 33 de la portion inférieure 12b n'épouse qu'une portion de la partie latérale 36.

Naturellement, la partie latérale 36 de la paroi de logement d'embase 32 ainsi que la surface latérale 33 de la portion inférieure 12b de l'embase 12 pourraient être de toute autre forme, à condition d'être sensiblement complémentaires, sans sortir du cadre de l'invention.

L'embase 12 de l'organe de manutention 8 est assemblé dans le logement d'embase 30 à l'aide d'une pluralité de vis de fixation 38 réparties autour de la partie principale 10, et aptes à être vissées dans le corps d'emballage 2 de l'emballage 1. Pour ce faire, la portion inférieure 12b de l'embase 12 est munie de logements de tête de vis 40 répartis préférentiellement de façon concentrique autour de l'axe longitudinal 26, chacun de ces logements de tête de vis 40 étant apte à constituer une butée pour la tête 42 d'une vis de fixation 38. Par ailleurs, chaque logement de tête de vis 40 est prolongé par un trou de passage 44, traversé par la portion filetée 46 de la vis de-fixation 38.

L'assemblage entre l'organe de manutention 8 et le corps d'emballage 2 nécessite également des moyens d'étanchéité 48, agencés de manière à procurer une étanchéité suffisamment satisfaisante pour que lorsque l'emballage 1 est chargé/déchargé en piscine, l'eau contaminée n'atteigne ni l'interface entre l'organe de manutention 8 et le corps d'emballage 2, ni les vis de fixation 38 de ce même organe de manutention 8.

Les moyens d'étanchéité 48 comportent alors une plaque d'étanchéité 50 prenant la forme d'une couronne réalisée de préférence en acier inoxydable, et étant située dans un logement de plaque 52 de manière à recouvrir chacune des vis de fixation 38.

Comme on peut le voir sur la figure 2, le logement de plaque 52 est délimité par un fond plat 54 constitué par la portion inférieure 12b de l'embase 12, par une paroi de logement de plaque 56 prévue sur la portion supérieure 12a de l'embase 12, ainsi que par une portion 58 de la partie latérale 36 de la paroi de logement d'embase 32. A ce titre, il est noté que la portion 58 de la partie latérale 36 correspond à la portion supérieure n'étant pas en contact avec la surface latérale 33 de la portion inférieure 12b de l'embase 12.

D'autre part, il est indiqué que la paroi de logement de plaque 56 est de forme sensiblement cylindrique d'axe longitudinal identique à l'axe longitudinal 26.

La plaque d'étanchéité 50 comporte une paroi périphérique externe 60 disposant notamment d'un chant externe 62, ce dernier correspondant au bord externe de la plaque épousant la portion 58 de la partie latérale 36 de la paroi de logement d'embase 32. En outre, le chant externe 62 dispose d'une rainure externe 64 à l'intérieur de laquelle est logé un joint d'étanchéité externe annulaire 66, ce joint 66 étant également en contact avec la portion 58 de la partie latérale 36, afin d'éviter que de la contamination ne s'introduise entre l'organe de manutention 8 et le corps d'emballage 2.

De la même façon, la plaque d'étanchéité 50 comporte une paroi périphérique interne 68 disposant notamment d'un chant interne 70, ce dernier correspondant au bord interne de la plaque épousant la paroi de logement de plaque 56 prévue sur la portion supérieure 12a de l'embase 12. En outre, le chant interne 70 dispose d'une rainure interne 72 à l'intérieur de laquelle est logé un joint d'étanchéité interne annulaire 74, ce joint 74 étant également en contact avec la paroi de logement de plaque 56. La combinaison des joints 66 et 74 permet d'éviter que la contamination n'atteigne les vis de fixation 38. Il est précisé que les joints d'étanchéité externe et interne 66 et 74 sont de préférence réalisés dans un matériau élastomère.

Dans le but de rendre la plaque d'étanchéité 50 facilement amovible, le chant interne 70 de cette dernière dispose d'une portion filetée 76 d'axe longitudinal identique à l'axe longitudinal 26, et apte à coopérer avec une portion filetée 78 prévue sur la paroi de logement de plaque 56. De cette façon, la plaque d'étanchéité 50 peut être montée de façon vissée sur l'embase 12. Il est précisé que la portion filetée 76 du chant interne 70 se situe dans le prolongement de la portion de ce même chant sur laquelle est pratiquée la rainure 72, celle-ci se situant plus vers l'extérieur du corps d'emballage 2 que la portion filetée 76.

Notons comme cela est visible sur la figure 2 que pour faciliter les opérations de vissage/dévissage de la plaque d'étanchéité 50, celle-ci peut comporter des orifices de prise 80 agencés sur sa surface extérieure 82 et destinés à coopérer avec un outillage adapté (non représenté). En outre, il est indiqué que lors de l'assemblage par vissage de la plaque d'étanchéité 50 sur l'embase 12 de l'organe de manutention 8, la surface intérieure 83 de cette plaque 50 vient en butée contre la portion inférieure 12b de l'embase 12, et plus précisément contre le fond plat 54 délimitant le logement de plaque 52. A cet égard, il est également précisé que la surface intérieure 83 de la plaque d'étanchéité 50 doit être adaptée pour entrer en contact avec le fond plat 54 et non avec les vis de fixation 38, les têtes 42 de ces vis de fixation 38 étant pourtant susceptibles de faire saillie en dehors des logements de tête de vis 40. Par conséquent, la surface intérieure 83 dispose de préférence d'un évidement annulaire 85 situé en regard des vis de fixation 38, et conçu de manière à ce que les têtes de vis 42 puissent être partiellement introduites dans ce renfoncement 85 sans former de butées, lors de l'assemblage par vissage de la plaque d'étanchéité 50 sur l'embase 12.

D'autre part, il est noté que lorsque le montage de la plaque d'étanchéité 50 est achevé, la surface extérieure 82 de cette plaque 50 se situe sensiblement dans la continuité de la paroi externe 7 du corps d'emballage 2.

Toujours en référence aux figures 2 et 3, l'organe de manutention 8 est muni d'un réseau de canaux 84 permettant d'effectuer un contrôle d'étanchéité des moyens d'étanchéité 48. Le réseau de canaux 84 est réalisé de manière à communiquer avec un orifice d'accès 86 prévu à l'extrémité de la partie principale 10 de l'organe de manutention 8, cet orifice d'accès 86 débouchant en dehors de cette partie principale 10 et étant obturé à l'aide d'un bouchon amovible 88, monté préférentiellement de façon vissée dans l'orifice d'accès 86.

Le réseau de canaux 84 comprend tout d'abord un canal longitudinal 90 débouchant dans l'orifice d'accès 86 et étant d'axe identique à l'axe longitudinal 26 de la surface extérieure 24 de la partie principale 10, le canal 90 étant pratiqué de manière à traverser entièrement l'organe de manutention 8. De plus, il est prévu une rainure radiale 92 sur la portion inférieure 12b de l'embase 12, cette rainure 92 formant à l'aide du fond plat 34 de la paroi de logement d'embase 32, un canal radial 94 communiquant avec le canal 90 et étant perpendiculaire à l'axe longitudinal 26.

A partir de ce canal radial 94, un autre canal longitudinal 96 s'étend sensiblement parallèlement au canal 90 en direction d'un espace 98 entourant la partie principale 10 de l'organe de manutention 8, et partiellement délimité par l'évidement 85 de la surface intérieure 83 de la plaque d'étanchéité 50. Notons que cet espace 98 est également partiellement délimité par le fond plat 54 du logement de plaque 52, et est en partie comblé par les têtes 42 des vis de fixation 38.

Egalement à partir du canal radial 94, un canal circonférentiel 100 d'axe identique à l'axe longitudinal 26 s'étend de manière à traverser l'ensemble des trous de passage 44. A ce titre, il est indiqué que le canal circonférentiel 100 est réalisé conjointement à l'aide d'une rainure circonférentielle 102 prévue sur la portion inférieure 12b de l'embase 12, et du fond plat 34 de la paroi de logement d'embase 32.

Bien entendu, le réseau de canaux 84 peut être adapté, toujours de manière à autoriser une communication entre l'espace 98 et l'orifice d'accès 86, et/ou de façon à autoriser une communication entre chacun des trous de passage 44 et l'orifice d'accès 86, sans sortir du cadre de l'invention.

En référence à la figure 4, pour effectuer un contrôle d'étanchéité des moyens d'étanchéité 48, le bouchon amovible 88 est retiré de façon à ce que des moyens de contrôle d'étanchéité classiques 104 puissent communiquer avec le réseau de canaux 84. Ainsi, cette communication peut être rapidement établie en vissant un embout perforé 106 appartenant aux moyens de contrôle 104, dans l'orifice d'accès 86 de la partie principale 10.

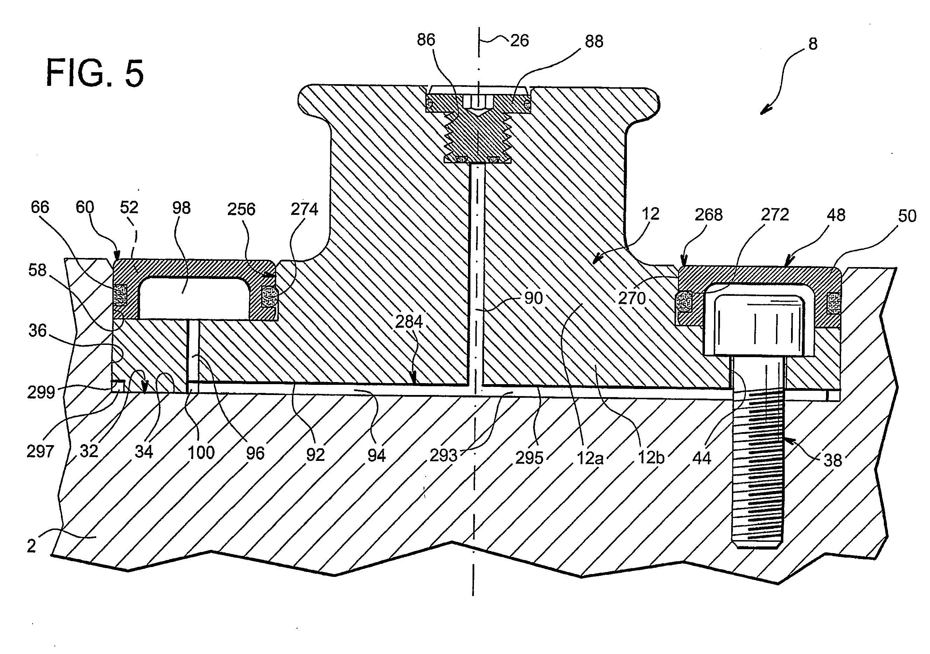

En référence conjointement aux figures 5 à 7, il est représenté un assemblage entre le corps d'emballage 2 et l'un des organes de manutention 8 d'un emballage 1 selon un second mode de réalisation préféré de la présente invention. Bien entendu, dans ce mode de réalisation préféré, la totalité des assemblages entre les organes de manutention 8 et le corps d'emballage 2 sont de préférence identiques à celui qui va être décrit ci-dessous.

Sur ces figures 5 à 7, les éléments portant les mêmes références numériques que celles attachées aux éléments représentés sur les figures 1 à 4, correspondent à des éléments identiques ou similaires.

A ce titre, on peut noter que cet assemblage est relativement similaire à celui présenté dans le premier mode de réalisation préféré de la présente invention, à la différence que la plaque d'étanchéité 50 des moyens d'étanchéité 48 n'est plus montée dans le logement de plaque 52 de façon vissée, mais de façon clipsée.

Pour ce faire, la plaque d'étanchéité 50 comporte une paroi périphérique interne 268 disposant notamment d'un chant interne 270, ce dernier correspondant au bord interne de la plaque épousant une paroi de logement de plaque 256 prévue sur la portion supérieure 12a de l'embase 12. Il est indiqué que la paroi de logement de plaque 256 est de forme différente de celle de la paroi de logement de plaque 56 du premier mode de réalisation préféré, mais toujours sensiblement cylindrique d'axe longitudinal identique à l'axe longitudinal 26. A cet égard, notons que la seule différence entre les plaques d'étanchéité des premier et second modes de réalisation préférés se situe au niveau des chants internes 70 et 270.

De la même manière, il est indiqué que les éléments délimitant le logement de plaque 52 autres que la paroi de logement de plaque 256, c'est-à-dire le fond plat 54 constitué par la portion inférieure 12b de l'embase 12 et la portion 58 de la partie latérale 36 de la paroi de logement d'embase 32, sont identiques à ceux présentés dans le premier mode de réalisation préféré de la présente invention.

Ainsi, le chant interne 270 dispose d'une rainure interne 272 à l'intérieur de laquelle est logé un joint d'étanchéité interne annulaire 274, ce joint 274 étant également en contact avec la paroi de logement de plaque 256, afin d'éviter que la contamination n'atteigne les vis de fixation 38. Il est précisé que le joint d'étanchéité interne 274 est de préférence réalisé dans un matériau élastomère.

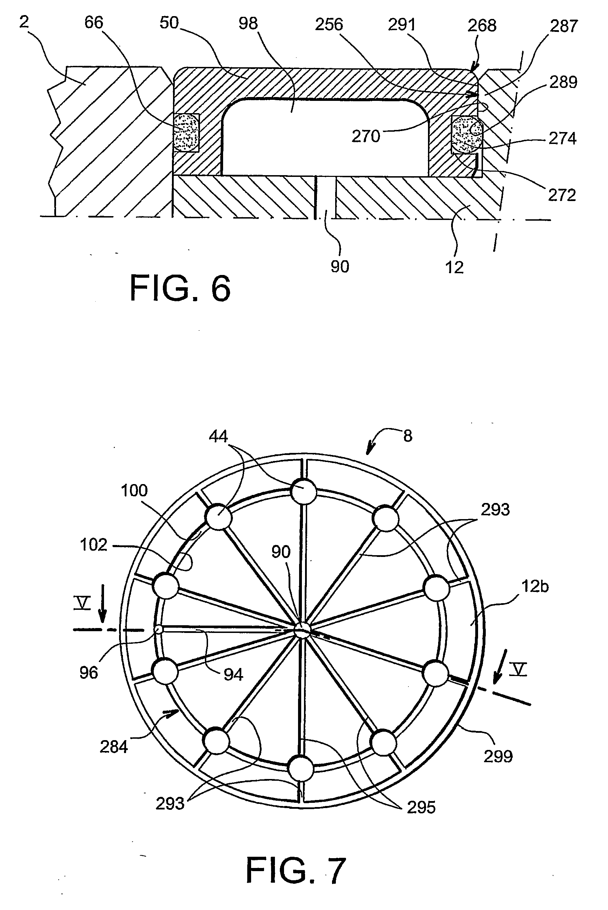

Comme on peut l'apercevoir sur la figure 6, la paroi de logement de plaque 256 comporte un épaulement 287 s'étendant vers l'intérieur du logement de plaque 52. Lorsque la plaque d'étanchéité 50 est montée sur l'embase 12 de l'organe de manutention 8, le joint d'étanchéité interne 274 logé dans la rainure 272 et faisant saillie en dehors de celle-ci est en appui contre une surface interne 289 de l'épaulement 287, orientée de façon générale vers la portion inférieure 12b de l'embase 12. Par conséquent, cette configuration particulière assure le maintien de la plaque d'étanchéité 50 dans le logement de plaque 52. A titre d'exemple illustratif, la surface interne 289 de l'épaulement 287 peut être sensiblement perpendiculaire à l'axe longitudinal 26, ou encore inclinée de façon à s'écarter de cet axe 26 en s'éloignant de la portion inférieure 12b.

De plus, pour pouvoir effectuer le montage par clipsage de la plaque d'étanchéité 50, le joint d'étanchéité interne 274 est conçu de manière à pouvoir être comprimé entre la rainure 272 du chant interne 270, et une partie 291 de diamètre maximal de l'épaulement 287. De cette manière, une fois la partie de diamètre maximal 291 passée, le joint d'étanchéité interne 274 peut se décomprimer partiellement afin d'épouser notamment la surface interne 289 de l'épaulement 287.

Plus particulièrement en référence aux figures 5 et 7, l'organe de manutention 8 est muni d'un réseau de canaux 284 permettant d'effectuer un contrôle d'étanchéité des moyens d'étanchéité 48, ce réseau de canaux 284 étant différent du réseau de canaux 84 décrit dans le premier mode de réalisation préféré. Néanmoins, le réseau de canaux 284 peut également être adapté, toujours de manière à autoriser une communication entre l'espace 98 et l'orifice d'accès 86, et/ou de façon à autoriser une communication entre chacun des trous de passage 44 et l'orifice d'accès 86, sans sortir du cadre de l'invention.

Le réseau de canaux 284 comprend tout d'abord le canal longitudinal 90 débouchant dans l'orifice d'accès 86, le canal radial 94 formé conjointement par la rainure 92 et le fond plat 34 de la paroi de logement d'embase 32, le canal longitudinal 96 s'étendant sensiblement parallèlement au canal 90 en direction de l'espace 98 entourant la partie principale 10, ainsi que le canal circonférentiel 100 formé conjointement par la rainure circonférentielle 102 et le fond plat 34 de la paroi de logement d'embase 32.

Par ailleurs, le réseau de canaux 284 comprend également une pluralité de canaux radiaux 293 communiquant avec le canal 90, les canaux radiaux 293 étant formés d'une part à l'aide de rainures radiales 295 pratiquées sur la portion inférieure 12b de l'embase 12, et d'autre part à l'aide du fond plat 34 de la paroi de logement d'embase 32.

Chacun des canaux radiaux 293 traverse un trou de passage 44, et s'étend jusqu'à la surface latérale 33 de la portion inférieure 12b de l'embase 12. Par ailleurs, il est également prévu un autre canal circonférentiel 297 communiquant avec chacun des canaux radiaux 293, le canal circonférentiel 297 étant conjointement formé à l'aide d'un usinage circonférentiel 299 pratiqué sur la portion inférieure 12b de l'embase 12, du fond plat 34 de la paroi de logement d'embase 32, et de la partie latérale 36 de la paroi de logement d'embase 32.

A l'aide du réseau de canaux 284 décrit ci-dessus, il est non seulement possible d'effectuer des contrôles d'étanchéité en raccordant des moyens de contrôle d'étanchéité 104 à l'orifice d'accès 86, mais également de faciliter/réaliser les opérations de montage/démontage de la plaque d'étanchéité 50.

En effet, l'orifice d'accès 86 est également apte à recevoir des moyens de mise en pression/dépression (non représentés), susceptibles de générer, par l'intermédiaire du réseau de canaux 284, une pression/dépression à l'intérieur de l'espace 98. Il est précisé que ces moyens de mise en pression/dépression sont notamment extrêmement utiles lorsque l'opération de compression du joint d'étanchéité interne 274, entre l'épaulement 287 et la rainure 272, est difficile à réaliser par une simple action manuelle. De plus, le démontage de cette plaque 50 peut alors être effectué par une unique mise en pression de l'espace 98, sans nécessiter d'outillage spécifique supplémentaire, ni d'orifices de prise sur la surface extérieure 82 de la plaque d'étanchéité 50.

Enfin, notons que la solution d'assemblage par clipsage de la plaque d'étanchéité 50 permet de ne pas limiter la forme de cette dernière à celle d'une couronne. En effet, le montage par clipsage ne nécessite aucune forme particulière, contrairement à l'assemblage par vissage qui requiert des formes cylindriques de section circulaire. De cette façon, la plaque d'étanchéité 50 peut alors prendre la forme d'un cadre quelconque, muni de joints d'étanchéité externe et interne également en forme de cadre, cette possibilité se traduisant directement par un large choix de positionnement des vis de fixation 38 sur l'embase 12, ainsi qu'un large choix dans la géométrie de cette embase.

Bien entendu, diverses modifications peuvent être apportées par l'homme du métier à l'emballage 1 qui vient d'être décrit, uniquement à titre d'exemples non limitatifs.

## Revendications

1. Emballage (1) destiné au transport/stockage de matières radioactives, comprenant un corps d'emballage (2) et au moins un organe de manutention (8) assemblé sur ledit corps d'emballage (2), chaque organe de manutention (8) étant muni d'une partie principale (10) susceptible de coopérer avec un mécanisme de préhension et faisant saillie du corps d'emballage, ainsi que d'une embase (12) solidaire de la partie principale (10) et située dans un logement d'embase (30) délimité par une paroi de logement d'embase (32) prévue sur le corps d'emballage (2), l'emballage comportant en outre, pour chaque organe de manutention (8), d'une part une pluralité de vis de fixation (38) réparties autour de la partie principale (10) et assurant la fixation de l'embase (12) sur le corps d'emballage (2), et d'autre part des moyens d'étanchéité (48) interposés entre l'embase (12) de l'organe de manutention et le corps d'emballage (2), **caractérisé en ce que** pour chaque organe de manutention (8), les moyens d'étanchéité (48) comprennent une plaque d'étanchéité (50) située dans un logement de plaque (52) délimité conjointement par une paroi de logement de plaque (56,256) prévue sur l'embase (12) de l'organe de manutention (8) et par une portion (58) de la paroi de logement d'embase (32), ladite plaque d'étanchéité (50) étant montée de façon amovible dans le logement de plaque (52) de manière à entourer la partie principale (10) dudit organe de manutention et à recouvrir chaque vis de fixation (38), lesdits moyens d'étanchéité (48) comportant en outre un joint d'étanchéité externe (66) interposé entre une paroi périphérique externe (60) de ladite plaque d'étanchéité et la portion (58) de la paroi de logement d'embase (32) délimitant partiellement le logement de plaque (52), ainsi qu'un joint d'étanchéité interne (74,274) interposé entre une paroi périphérique interne (68,268) de ladite plaque d'étanchéité et la paroi de logement de plaque (56,256).

2. Emballage (1) selon la revendication 1, **caractérisé en ce que** la paroi périphérique externe (60) de la plaque d'étanchéité comporte un chant externe (62) en contact avec le joint d'étanchéité externe (66), et **en ce que** la paroi périphérique interne (68,268) de la plaque d'étanchéité comporte un chant interne (70,270) en contact avec le joint d'étanchéité interne (74,274).

3. Emballage (1) selon la revendication 2, **caractérisé en ce que** le chant externe (62) dispose d'une rainure externe (64) s'étendant tout le long dudit chant externe (62) et à l'intérieur de laquelle est logé le joint d'étanchéité externe (66), et **en ce que** le chant interne (70,270) dispose d'une rainure interne (72,272) s'étendant tout le long dudit chant interne (70,270) et à l'intérieur de laquelle est logé le joint d'étanchéité interne (74,274).

4. Emballage (1) selon l'une quelconque des revendications précédentes, **caractérisé en ce que** chaque organe de manutention (8) est muni d'un réseau de canaux (84,284) permettant d'effectuer un contrôle d'étanchéité des moyens d'étanchéité (48), le réseau de canaux (84,284) communiquant avec au moins un orifice d'accès (86) prévu dans la partie principale (10) de l'organe de manutention (8) de manière à déboucher sur l'extérieur de ladite partie principale (10), chaque orifice d'accès (86) étant obturé à l'aide d'un bouchon amovible (88).

5. Emballage (1) selon la revendication 4, **caractérisé en ce que** pour chaque organe de manutention (8), la plaque d'étanchéité (50) dispose d'une surface intérieure (83) délimitant partiellement un espace (98) entourant la partie principale (10) de l'organe de manutention (8) et étant en partie comblé par les têtes (42) des vis de fixation (38), le réseau de canaux (84,284) étant agencé de façon à autoriser une communication entre ledit espace (98) et au moins un orifice d'accès (86).

6. Emballage (1) selon l'une quelconque des revendications précédentes, **caractérisé en ce que** pour chaque organe de manutention (8), la plaque d'étanchéité (50) a la forme d'une couronne, et **en ce que** les joints d'étanchéité externe et interne (66,74,274) ont chacun la forme d'un joint annulaire.

7. Emballage (1) selon l'une quelconque des revendications 1 à 5, **caractérisé en ce que** pour chaque organe de manutention (8), la plaque d'étanchéité (50) a la forme d'un cadre, et **en ce que** les joints d'étanchéité externe et interne ont également chacun la forme d'un cadre.

8. Emballage (1) selon la revendication 6, **caractérisé en ce que** pour chaque organe de manutention (8), la plaque d'étanchéité (50) est montée de façon vissée dans le logement de plaque (52).

9. Emballage (1) selon la revendication 2 et la revendication 8 combinées, **caractérisé en ce que** le chant interne (70) de la plaque d'étanchéité (50) et la paroi de logement de plaque (56) prévue sur l'embase (12) de l'organe de manutention (8), disposent chacun d'une portion filetée (76,78) coopérant entre elles.

10. Emballage (1) selon l'une quelconque des revendications 1 à 7, **caractérisé en ce que** pour chaque organe de manutention (8), la plaque d'étanchéité (50) est montée de façon clipsée dans le logement de plaque (52).

11. Emballage (1) selon la revendication 3 et la revendication 10 combinées, **caractérisé en ce que** pour chaque organe de manutention (8), la paroi de logement de plaque (256) prévue sur l'embase (12) de l'organe de manutention (8) comporte un épaulement (287), le joint d'étanchéité interne (274) logé dans la rainure (272) du chant interne (270) de la plaque d'étanchéité étant en appui contre une surface interne (289) dudit épaulement afin d'assurer le maintien de ladite plaque d'étanchéité (50) dans le logement de plaque (52), le joint d'étanchéité interne (274) étant apte à être comprimé entre la rainure (272) du chant interne (270) et une partie (291) de diamètre maximal de l'épaulement (287), afin d'autoriser le montage/démontage de ladite plaque d'étanchéité (50).

12. Emballage (1) selon la revendication 5 et la revendication 11 combinées, **caractérisé en ce qu'**au moins un orifice d'accès (86) prévu dans la partie principale (10) de l'organe de manutention (8) est apte à recevoir des moyens de mise en pression/dépression susceptibles de générer, par l'intermédiaire du réseau de canaux (284), une pression/dépression à l'intérieur de l'espace (98) partiellement délimité par la surface intérieure (83) de la plaque d'étanchéité (50) et entourant la partie principale (10) de l'organe de manutention (8), afin de provoquer un montage/démontage de ladite plaque d'étanchéité (50).

13. Emballage (1) selon l'une quelconque des revendications précédentes, **caractérisé en ce que** pour chaque organe de manutention (8), la plaque d'étanchéité (50) est réalisée en acier inoxydable.

14. Emballage (1) selon l'une quelconque des revendications précédentes, **caractérisé en ce que** pour chaque organe de manutention (8), les joints d'étanchéité externe et interne (66,74,274) sont chacun réalisé dans un matériau élastomère.

## Claims

1. Container (1) intended for transport/storage of radioactive materials, comprising a container body (2) and at least one handling device (8) assembled on said container body (2), each handling device (8) being provided with a main part (10) capable of cooperating with a gripping mechanism and projecting from the container body, and a base (12) fixed to the main part (10) and located in a base housing (30) delimited by a base housing wall (32) formed on the container body (2), the container also comprising firstly a plurality of attachment screws (38) for each handling device (8) distributed around the main part (10) and attaching the base (12) onto the container body (2), and secondly sealing means (48) inserted between the base (12) of the handling device and the container body (2), **characterised in that** the sealing means (48) for each handling device (8) comprise a sealing plate (50) located in a plate housing (52) delimited jointly by a plate housing wall (56, 256) provided on the base (12) of the handling device (8) and by a portion (58) of the base housing wall (32), said sealing plate (50) being installed removably in the plate housing (52) so as to surround the main part (10) of said handling device and to cover each attachment screw (38), said sealing means (48) also including an external seal (66) inserted between a peripheral wall (60) external to said sealing plate and the portion (58) of the base housing wall (32) partially delimiting the plate housing (52), and an internal seal (74, 274) inserted between a peripheral wall (68, 268) internal to said sealing plate and the plate housing wall (56, 256).

2. Container (1) according to claim 1, **characterised in that** the external peripheral wall (60) of the sealing plate comprises an external edge (62) in contact with the external seal (66), and **in that** the internal peripheral wall (68, 268) of the sealing plate comprises an internal edge (70, 270) in contact with the internal seal (74, 274).

3. Container (1) according to claim 2, **characterised in that** the external edge (62) has an external groove (64) extending all along said external edge (62) and inside which the external seal (66) is located, and **in that** the internal edge (70, 270) has an internal groove (72, 272) extending all along said internal edge (70, 270) and inside which the internal seal (74, 274) is located.

4. Container (1) according to any one of the previous claims, **characterised in that** each handling device (8) is provided with a channels network (84, 284) for making a sealing test of the sealing means (48), the channels network (84, 284) communicating at least with an access orifice (86) provided in the main part (10) of the handling device (8) so as to open up on the outside of said main part (10), each access orifice (86) being closed off using a removable plug (88).

5. Container (1) according to claim 4, **characterised in that** for each handling device (8), the sealing plate (50) has an inside surface (83) partially delimiting a space (98) surrounding the main part (10) of the handling device (8) and partly filled in by the heads (42) of the attachment screws (38), the channels network (84, 284) being arranged so as to enable communication between said space (98) and at least one access orifice (86).

6. Container (1) according to any one of the previous claims, **characterised in that** the sealing plate (50) for each handling device (8) is in the shape of a ring and **in that** the external and internal seals (66, 74, 274) are each in the shape of an annular seal.

7. Container (1) according to any one of claims 1 to 5, **characterised in that** the sealing plate (50) for each handling device (8), is in the shape of a frame, and **in that** each of the external and internal seals is also in the shape of a frame.

8. Container (1) according to claim 6, **characterised in that** the sealing plate (50) for each handling device (8) is installed screwed in the plate housing (52).

9. Container (1) according to claim 2 and claim 8 jointly, **characterised in that** the internal edge (70) of the sealing plate (50) and the plate housing wall (56) provided on the base (12) of the handling device (8), each have a threaded portion (76,78) cooperating with each other.

10. Container (1) according to any one of claims 1 to 7, **characterised in that** the sealing plate (50) for each handling device (8) is installed clipped in the plate housing (52).

11. Container (1) according to claim 3 and claim 10 jointly, **characterised in that** for each handling device (8), the plate housing wall (256) provided on the base (12) of the handling device (8) comprises a shoulder (287), the internal seal (274) housed in the groove (272) of the internal edge (270) of the sealing plate bearing in contact with an inside surface (289) of said shoulder in order to maintain said sealing plate (50) in the plate housing (52), the internal seal (274) being compressed between the groove (272) of the internal edge (270) and a part (291) of the maximum diameter of the shoulder (287), to enable assembly/disassembly of said sealing plate (50).

12. Container (1) according to claim 5 and claim 11 jointly, **characterised in that** at least one access orifice (86) provided in the main part (10) of the handling device (8) is capable of holding pressurisation/vacuum creation means that can generate a pressure/vacuum inside the space (98) partially delimited by the inside surface (83) of the sealing plate (50) and surrounding the main part (10) of the handling device (8), through the channels network (284) in order to cause assembly/disassembly of the sealing plate (50).

13. Container (1) according to any one of the previous claims, **characterised in that** the sealing plate (50) for each handling device (8) is made of stainless steel.

14. Container (1) according to any one of the previous claims, **characterised in that** for each handling device (8), each of the external and internal seals (66,74,274) is made from an elastomer material.

## Patentansprüche

1. Verpackung (1) für den Transport/die Lagerung von radioaktiven Materialien, umfassend einen Verpackungskörper (2) sowie wenigstens ein Handhabungsorgan (8), welches an dem Verpackungskörper (2) angeordnet ist, wobei jedes Handhabungsorgan (8) mit einem Hauptteil (10) versehen ist, welches dazu ausgelegt ist, mit einem Greifmechanismus zusammenzuwirken, und welches vom Verpackungskörper vorsteht, sowie mit einem Sockel (12), der mit dem Hauptteil (10) verbunden und in einer Sockelaufnahme (30) angeordnet ist, welche durch eine Sockelaufnahmewand (32) begrenzt ist, die am Verpackungskörper (2) vorgesehen ist, wobei die Verpackung ferner für jedes Handhabungsorgan (8) einerseits eine Mehrzahl von Befestigungsschrauben (38) umfasst, die um den Hauptteil (10) herum verteilt sind und die Befestigung des Sockels (12) am Verpackungskörper (2) sicherstellen, sowie andererseits Dichtungsmittel (48), die zwischen dem Sockel (12) des Handhabungsorgans und dem Verpackungskörper (2) eingefügt sind, **dadurch gekennzeichnet, dass** die Dichtungsmittel (48) für jedes Handhabungsorgan (8) eine Dichtungsplatte (50) umfassen, welche in einer Plattenaufnahme (52) angeordnet ist, die gemeinsam durch eine am Sockel (12) des Handhabungsorgans (8) vorgesehene Plattenaufnahmewand (56, 256) sowie durch einen Abschnitt (58) der Wand der Sockelaufnahme (32) begrenzt wird, wobei die Dichtungsplatte (50) in abnehmbarer Weise in der Plattenaufnahme (52) derart montiert ist, dass sie den Hauptteil (10) des Handhabungsorgans umgibt, und dass sie jede Befestigungsschraube (38) überdeckt, wobei die Dichtungsmittel (48) ferner eine externe Dichtung (66) umfassen, die zwischen einer externen Umfangswand (60) der Dichtungsplatte und dem Abschnitt (58) der Sockelaufnahmewand (32) eingefügt ist, die teilweise die Plattenaufnahme (52) begrenzt, sowie eine interne Dichtung (74, 274), die zwischen einer internen Umfangswand (68, 268) der Dichtungsplatte und der Plattenaufnahmewand (56, 256) eingefügt ist.

2. Verpackung (1) nach Anspruch 1, **dadurch gekennzeichnet, dass** die externe Umfangswand (60) der Dichtungsplatte eine externe Kante (62) in Kontakt mit der externen Dichtung (66) umfasst, und dass die interne Umfangswand (68, 268) der Dichtungsplatte eine interne Kante (70, 270) in Kontakt mit der internen Dichtung (74, 274) umfasst.

3. Verpackung (1) nach Anspruch 2, **dadurch gekennzeichnet, dass** die externe Kante (62) über eine externe Rille (64) verfügt, die sich entlang der gesamten externen Kante (62) erstreckt, und in deren Inneren die externe Dichtung (66) aufgenommen ist, und dass die interne Kante (70, 270) über eine interne Rille (72, 272) verfügt, die sich entlang der gesamten internen Kante (70, 270) erstreckt, und in deren Inneren die interne Dichtung (74, 274) aufgenommen ist.

4. Verpackung (1) nach einem der vorhergehenden Ansprüche, **dadurch gekennzeichnet, dass** jedes Handhabungsorgan (8) mit einem Kanalnetz (84, 284) ausgestattet ist, welches es erlaubt, eine Kontrolle der Dichtigkeit der Dichtungsmittel (48) durchzuführen, wobei das Kanalnetz (84, 284) in Verbindung ist mit wenigstens einer Zugangsöffnung (86), welche im Hauptteil (10) des Handhabungsorgans (8) derart vorgesehen ist, dass sie zum Äußeren des Hauptteils (10) hin mündet, wobei jede Zugangsöffnung (86) mit Hilfe eines abnehmbaren Stopfens (88) verschlossen ist.

5. Verpackung (1) nach Anspruch 4, **dadurch gekennzeichnet, dass** für jedes Handhabungsorgan (8) die Dichtungsplatte (50) über eine innere Fläche (83) verfügt, die teilweise einen Raum (98) begrenzt, welcher den Hauptteil (10) des Handhabungsorgans (8) umgibt und zum Teil gefüllt ist mit den Köpfen (42) der Befestigungsschrauben (38), wobei das Kanalnetz (84, 284) derart gestaltet ist, dass es eine Verbindung zwischen dem Raum (98) und wenigstens einer Zugangsöffnung (86) ermöglicht.

6. Verpackung (1) nach einem der vorhergehenden Ansprüche, **dadurch gekennzeichnet, dass** für jedes Handhabungsorgan (8) die Dichtungsplatte (50) die Form eines Kranzes aufweist, und dass die externen und internen Dichtungen (66, 74, 274) jeweils die Form einer Ringdichtung aufweisen.

7. Verpackung (1) nach einem der Ansprüche 1-5, **dadurch gekennzeichnet, dass** für jedes Handhabungsorgan (8) die Dichtungsplatte (50) die Form eines Rahmens aufweist, und dass die externen und internen Dichtungen ebenfalls jeweils die Form eines Rahmens aufweisen.

8. Verpackung (1) nach Anspruch 6, **dadurch gekennzeichnet, dass** für jedes Handhabungsorgan (8) die Dichtungsplatte (50) in verschraubter Weise in der Plattenaufnahme (52) montiert ist.

9. Verpackung (1) nach Anspruch 2 und Anspruch 8 in Kombination, **dadurch gekennzeichnet, dass** die interne Kante (70) der Dichtungsplatte (50) und die Plattenaufnahmewand (56), die am Sockel (12) des Handhabungsorgans (8) vorgesehen ist, jeweils über einen Gewindeabschnitt (76, 78) verfügen, die miteinander zusammenwirken.

10. Verpackung (1) nach einem der Ansprüche 1 - 7, **dadurch gekennzeichnet, dass** für jedes Handhabungsorgan (8) die Dichtungsplatte (50) in geclipster Weise in der Plattenaufnahme (52) montiert ist.

11. Verpackung (1) nach Anspruch 3 und Anspruch 10 in Kombination, **dadurch gekennzeichnet, dass** für jedes Handhabungsorgan (8) die Plattenaufnahmewand (256), welche am Sockel (12) des Handhabungsorgans (8) vorgesehen ist, eine Schulter (287) umfasst, wobei die interne Dichtung (274), die in der Rille (272) der internen Kante (270) der Dichtungsplatte aufgenommen ist, in Anlage an einer internen Fläche (289) der Schulter ist, um den Halt der Dichtungsplatte (50) in der Plattenaufnahme (52) sicher zu stellen, wobei die interne Dichtung (274) dazu ausgelegt ist, zwischen der Rille (272) der internen Kante (270) und einem Teil (291) der Schulter (287) mit maximalem Durchmesser komprimiert zu werden, um die Montage/Demontage der Dichtungsplatte (50) zu ermöglichen.

12. Verpackung (1) nach Anspruch 5 und Anspruch 11 in Kombination, **dadurch gekennzeichnet, dass** wenigstens eine Zugangsöffnung (86) die im Hauptteil (10) des Handhabungsorgans (8) vorgesehen ist, dazu ausgelegt ist, Mittel zum Ausüben von Druck/Unterdruck aufzunehmen, die dazu ausgelegt sind, mit Hilfe des Kanalnetzes (284) einen Druck/Unterdruck im Inneren des Raums (98) zu erzeugen, der teilweise durch die innere Fläche (83) der Dichtungsplatte (50) begrenzt wird und den Hauptteil (10) des Handhabungsorgans (8) umgibt, um eine Montage/Demontage der Dichtungsplatte (50) zu bewirken.

13. Verpackung (1) nach einem der vorhergehenden Ansprüche, **dadurch gekennzeichnet, dass** für jedes Handhabungsorgan (8) die Dichtungsplatte (50) aus rostfreiem Stahl hergestellt ist.

14. Verpackung (1) nach einem der vorhergehenden Ansprüche, **dadurch gekennzeichnet, dass** für jedes Handhabungsorgan (8) die externen und internen Dichtungen (66, 74, 274) jeweils aus einem Elastomermaterial hergestellt sind.
